# EUROPÄISCHE PATENTSCHRIFT

(11) **EP 1 213 500 B1**
(45) Veröffentlichungstag und Bekanntmachung des Hinweises auf die Patenterteilung: **02.03.2005**
(21) Anmeldenummer: 01122814.5
(22) Anmeldetag: 22.09.2001
(51) Int. Cl.: F16C 33/04

(54) **Gleitlagerung für eine magnetangetriebene Kreiselpumpe**
Sliding bearing for a magnetically driven centrifugal pump
Palier lisse pour pompe centrifuge entraînée magnétiquement

(30) Priorität: 08.12.2000 DE 10061049
(43) Veröffentlichungstag der Anmeldung: 12.06.2002
(73) Patentinhaber: ITT Richter Chemie-Technik GmbH, D-47906 Kempen (DE)
(72) Erfinder: Rennett, Ulrich, 41366 Schwalmtal (DE)
(74) Vertreter: COHAUSZ DAWIDOWICZ HANNIG & PARTNER

(56) Entgegenhaltungen:
- DE-U- 9 204 349
- DE-U- 29 610 799
- US-A- 5 209 577

## Beschreibung

Die Erfindung betrifft eine Gleitlagerung für eine magnetangetriebene Kreiselpumpe mit einem äußeren feststehenden rohrförmigen Lagergehäuse, in dem Lagerbuchsen, insbesondere aus Keramik drehfest einliegen, und wobei an den Lagerbuchsen stirnseitig außen Axiallagerringe anliegen, die jeweils von einer äußeren Axialscheibe gehalten sind, siehe DE-U-9 204 349.

Es sind Gleitlagerungen für magnetangetriebene Kreiselpumpen bekannt. Bei Ausfall der Lagerung kommt es in vielen Fällen auch zu Schäden an der Pumpe. Die Lager sind relativ komplex aufgebaut und bestehen aus Kombinationen aus Axial- und Radiallagern. Dabei müssen die Gleitlagerflächen exakt zueinander ausgerichtet werden. Hierzu sind oftmals messtechnische Überprüfungen erforderlich, die sehr viel Zeit in Anspruch nehmen. Betriebsschlosser sind oftmals aus Unkenntnis überfordert, wodurch neuerliche Schäden vorprogrammiert sind. In der heutigen Zeit wird größten Wert auf geringe Wartungs- bzw. Reparaturzeiten gelegt, da die Kosten hierfür sehr hoch liegen.

Durch die DE 296 10 799 U1 ist eine Gleitlagerung für eine magnetangetriebene Kreiselpumpe bekannt, bei der unmittelbar auf der Pumpenläuferwelle Lagerhülsen mit einer Distanzhülse angeordnet sind.Gleiches trifft auf die DE 92 04 349 U1 zu, aus der eine Gleitlageranordnung bekannt ist, bei der eine auf der Pumpenläuferwelle angeordnete Lagerhülse angeordnet ist.

In beiden Fällen werden die rotierenden Teile des Gleitlagers zusammen mit endseitigen Axialscheiben einzeln und unmittelbar auf der Pumpenläuferwelle montiert.

Aufgabe der Erfindung ist es, eine Gleitlagerung zu schaffen, bei der Montage und Demontage sowie Wartung und Reparatur einfacher und genauer sind und weniger Zeit benötigen.

Diese Aufgabe wird erfindungsgemäß durch die merkmale des Anspruchs 1 gelöst.

Die erfindungsgemäße Gleitlagerung bildet eine vom Herstellerwerk vormontierte Einheit (= Cartridge). Diese Einheit berücksichtigt alle Einstellmaße optimal. Bei der Montage muss lediglich die vormontierte Einheit angeschraubt zu werden, wodurch große Zeitersparnisse entstehen und Fehlerquellen vermieden werden.

Besonders vorteilhaft ist es, wenn für den Halt der Axialscheiben im Außenumfang der Lagerwelle Nuten eingebracht sind, in denen jeweils ein Sprengring einliegt, an dem die Axialscheibe anliegt. Auch ist von Vorteil, wenn auf dem Außenmantel des Lagergehäuses ein ringförmiger Lagerflansch befestigt insbesondere angeschraubt ist.

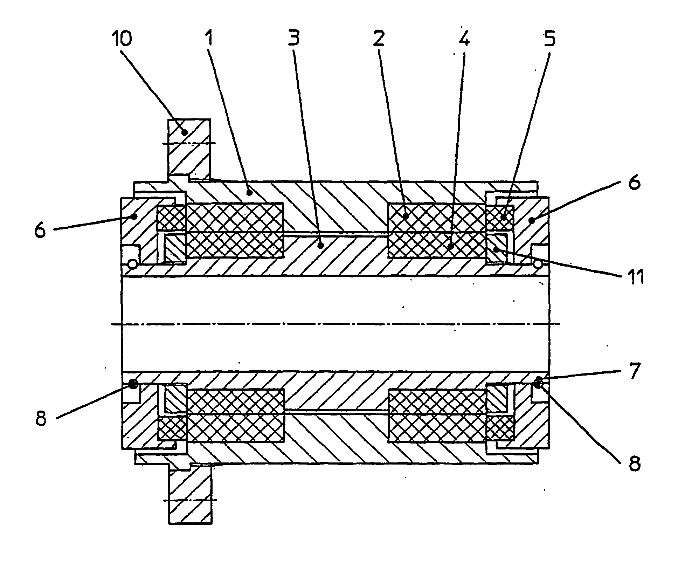

Ein Ausführungsbeispiel der Erfindung ist in der Zeichnung in einem axialen Schnitt dargestellt und wird im folgenden näher beschrieben.

Ein äußeres Lagergehäuse 1 bildet mit den integrierten Lagerbuchsen 2 aus Keramik und dem Lagerflansch 10 das stehende Radiallager. Das rotierende Radiallager, bestehend aus der hohlen Lagerwelle 3, den beiden keramischen Lagerhülsen 4 und den Wellenmuttern 11 ist in das komplette Lagergehäuse 1 eingeschoben. Die beiden Axiallager, bestehend aus den Axiallagerringen 5 und den Axialscheiben 6, sind axial gering verschiebbar auf der Welle 3 gelagert. Ihr axialer Bewegungsspielraum ist ca. 0,5 mm. Damit diese Bauteile eine unverlierbare Einheit (= Cartridge) bilden, sind beidseitig auf der Welle Sprengringe 8 in Nuten 7 angeordnet, so dass die Axialscheiben 6 fest liegen. Durch diese integrierten konstruktiven Maßnahmen wird durch den Einbau der Cartridge in die Pumpe erreicht, dass sich die Gleitlagerflächen automatisch richtig zueinander einstellen. Weitere Maßnahmen sind seitens des Monteurs nicht zu ergreifen.

In dem Inneren der hohlen Lagerwelle 3 liegt die nicht dargestellte Welle des Laufrades der Radialpumpe ein. An der dem Laufrad abgewandten Seite ist an der Welle der innere Magnetrotor des Magnetantriebs befestigt, wobei der Magnetrotor die Gleitlagerung außen umgibt. Der innere Magnetrotor ist von dem äußeren von einem Elektromotor angetriebenen Magnetrotor umgeben, wobei zwischen beiden Magnetrotoren ein Spalttopf liegt.

## Patentansprüche

1. Gleitlagerung für eine magnetangetriebene Kreiselpumpe mit einem äußeren feststehenden rohrförmigen Lagergehäuse (1), in dem Lagerbuchsen (2), insbesondere aus Keramik drehfest einliegen, und mit einer im Lagergehäuse koaxial einliegenden, rotierend gelagerten, für die Pumpenläuferwelle hohlen Lagerwelle (3) mit Lagerhülsen (4), insbesondere aus Keramik, die in den Lagerbuchsen (2) einliegen, wobei an den Lagerbuchsen (2) stirnseitig außen Axiallagerringe (5) anliegen, die jeweils von einer äußeren Axialscheibe (6) gehalten sind, die auf oder an der Lagerwelle (3) an beiden Enden angeordnet ist, wobei die Gleitlagerung eine vormontierte Einheit bildet, deren Teile (1 - 6) unverlierbar aneinander fest sind, und wobei die zwei endseitigen Axialscheiben (6) auf oder an der Lagerwelle (3) befestigt sind und die Lagerwelle (3) mit den Lagerhülsen (4) sowie die Axiallagerringe (5) in dem Lagergehäuse (1) halten.

2. Gleitlagerung nach Anspruch 1, **dadurch gekennzeichnet, dass** für den Halt der Axialscheiben (6) im Außenumfang der Lagerwelle (3) Nuten (7) eingebracht sind, in denen jeweils ein Sprengring (8) einliegt, an dem die Axialscheibe (6) anliegt.

3. Gleitlagerung nach Anspruch 1 oder 2, **dadurch gekennzeichnet, dass** auf dem Außenmantel des Lagergehäuses (1) ein ringförmiger Lagerflansch (10) befestigt insbesondere angeschraubt ist.

## Claims

1. A sliding bearing for a magnetically driven centrifugal pump, comprising a fixed, external, tubular bearing housing (1) in which bearing bushes (2), which in particular are made of ceramic, are inserted fixed in rotation, and comprising a rotatably mounted, hollow bearing shaft (3) for the pump rotor shaft, which bearing shaft is inserted coaxially in the bearing housing and comprises bearing sleeves (4) which in particular are made of ceramic and which are inserted in the bearing bushes (2), wherein axial bearing rings (5) are seated externally against the end faces of the bearing bushes (2) and are each held by an external axial disc (6) which is disposed on or at the bearing shaft (3) at both ends, wherein the sliding bearing forms a pre-assembled unit, the parts (1 - 6) of which are captively fixed to each other, and wherein the two axial discs (6) at the ends are fixed to the bearing shaft (3) and hold the bearing shaft (3), together with the bearing sleeves (4) and the axial bearing rings (5), in the bearing housing (1).

2. A sliding bearing according to claim 1, **characterised in that** grooves (7), in each of which a spring ring (8) is inserted against which the axial disc (6) is seated, are provided in the external periphery of the bearing shaft (3) for holding the axial discs (6).

3. A sliding bearing according to claim 1 or 2, **characterised in that** an annular bearing flange (10) is fixed, and in particular is screwed, to the external shell of the bearing housing (1).

## Revendications

1. Palier lisse pour une pompe centrifuge entraînée magnetiquement comportant un boitier de palier externe fixe tubulaire (1 ), dans lequel des bagues de palier (2) en particulier en ceramique sont inseree de maniere fixe en rotation, et comportant un arbre creux (3) monte rotatif pour l'arbre de rotor de pompe, insere coaxialement dans le boitier de palier et comportant des douilles de palier (4), en particulier en ceramique, qui sont inserees dans les bagues de palier (2) , des anneaux de roulement axiaux (5) s'appuyant ä l'extérieur du cöte frontal sur les bagues de palier (2), qui sont maintenus chacun par un disque axial externe (6), qui est dispose sur ou contre l'arbre de palier (3) aux deux extremites, le palier lisse formant une unite premontee dont les pieces (1-6) sont fixees les unes aux autres de manière imperdable, et les deux disques axiaux d'extremites (6) etant fixes sur ou contre l'arbre de palier (3) et maintenant l'arbre de palier (3) avec les douilles de palier (4) ainsi que les anneaux de roulement axiaux (5) dans le boitier de palier (1).

2. Palier lisse selon la revendication 1, **caracterise en ce qu'**ä la périphérie externe de 1' arbre de palier (3) sont menagees pour le maintien des disques axiaux (6) des rainures (7) dans chacune desquelles est insère un jonc elastique (8) sur lequel s'appuie le disque axial.

3. Palier lisse selon la revendication 1 ou 2, **caracterise en ce qu'**une bride de palier annulaire (10) est fixee en particulier vissee sur l'enveloppe externe du boitier de palier (1 ).
